Europäisches Patentamt

(19) European Patent Office (11) Publication number: **0 027 708**

Office européen des brevets **B1**

(12) **EUROPEAN PATENT SPECIFICATION**

(45) Date of publication of patent specification: **12.12.84** (51) Int. Cl.³: **F 16 L 11/08, B 29 D 23/00**

(21) Application number: **80303598.9**

(22) Date of filing: **13.10.80**

(54) **Thermoplastic reinforced hose.**

(30) Priority: **19.10.79 GB 7936386**

(43) Date of publication of application:
**29.04.81 Bulletin 81/17**

(45) Publication of the grant of the patent:
**12.12.84 Bulletin 84/50**

(84) Designated Contracting States:
**DE FR NL SE**

(56) References cited:
**DE-A-2 700 863**
**DE-A-2 820 465**
**DE-B-1 800 862**
**FR-A-2 268 214**
**FR-A-2 334 904**
**US-A-3 773 089**

(73) Proprietor: **ANGUS FIRE ARMOUR LIMITED**
**Dunlop House Ryder Street**
**St James's, London SW1Y 6PX (GB)**

(72) Inventor: **Nixon, John Peter**
**27 Watery Lane**
**Lancaster (GB)**
Inventor: **Whittaker, Keith**
**Dunkirk House**
**Low Bentham (GB)**
Inventor: **Harrison, David**
**Flat 2 Gable End Flying Horshoe**
**Clapham, Via Lancaster (GB)**
Inventor: **Sheard, Dennis Richard**
**Rose Cottage Bankwell Road**
**Giggleswick, North Yorks (GB)**

(74) Representative: **Pennant, Pyers et al**
**Stevens, Hewlett & Perkins 5 Quality Court**
**Chancery Lane**
**London, WC2A 1HZ (GB)**

Courier Press, Leamington Spa, England.

## Description

This invention concerns improvements in or relating to thermoplastic reinforced hose and in particular, though not exclusively, to layflat hose.

Layflat hose generally comprises a fluid impervious inner liner chemically and physically inert to the fluid to be transported, a textile reinforcement layer to provide the required burst strength and an outer cover to protect the reinforcement layer from damage caused by abrasion during handling (e.g. DE—A—2.700.863, FR—A—2.268.214).

Such hose generally has been made by a method consisting in the steps of forming said reinforcement layer, applying said outer cover thereto, forming said inner liner and applying an adhesive to the external surface thereof, inserting said adhesive coated liner into said reinforcement layer, and passing a fluid medium into said liner to inflate the assembly so formed.

Recently there has been a trend away from conventional vulcanisable rubber-based materials towards thermoplastic elastomers fro the liner, thermoplastic elastomers being both lighter than and chemically and physically inert towards a wider range of fluids than the conventional vulcanisable rubber-based materials thus enabling a given hose construction to have a much wider range of applications.

However this change has resulted in a problem in obtaining a sufficiently strong bond between the thermoplastic elastomer of the liner and the textile reinforcement layer which is maintained both under the operating conditions and in the event of fluid leakage through the liner.

This adhesion problem is due to the lack of polar chemical groupings in the known thermoplastic polyetherester elastomers used for the liner and is greatest when the textile reinforcement layer is made of polyester or polyamide material. As a result it has been necessary to use an adhesive bond the known thermoplastics liners to the reinforcement layer.

To date adhesives applied from solvent based solutions or pastes containing at least 30% of solvents such as chlorinated hydrocarbons, generally using two component systems followed by evaporation of the solvent, have been used and it has been found that the residual tack and frictional characteristics of the resultant adhesive coated liner effectively restricts the length of liner which can be inserted into a preformed length of textile jacket without stretching or distorting the liner to about 61 m (200 feet).

Furthermore, as a result of leakage through either the liner or cover, it has been found that the adhesive bond between the liner and reinforcement layer is rapidly weakened by contact with certain fluids e.g. hydrocarbon fuels, leading to hose delamination and consequently the hoses are unsuitable for transporting such fluids.

The invention as claimed is intended to provide thermoplastic reinforced hose which reduces at least some of the above-described disadvantages and can be used to transport a wide range of fluids including hydrocarbon fuels.

The invention solves the problem of providing a satisfactory bond between the thermoplastic elastomer of the liner and textile reinforcement without limiting the length of liner that can be inserted through a preferred reinforcement jacket to less than 61 m (200 feet) by applying a hot melt polyester adhesive to the liner.

The advantage afforded by the invention are that the residual tack and frictional characteristics of the adhesive coated liner are considerably less than those of the known adhesive coated liner enabling lengths in excess of 76,2 m (250 feet) and more preferably 152,4 m (500 feet) to be inserted through a preformed reinforcement jacket while subsequent activation of the adhesive to bond the liner to the reinforcement jacket occurs without any substantial softening of the liner thereby avoiding undesirable local changes in the thickness of the liner.

Preferably the polyetherester elastomer of the inner liner has the following characteristics:

| | |
|---|---|
| mpt (ASTM D 2117) | 156—210°C, preferably 164—200°C |
| Hardness (ASTM D 2240) | 35—45D, preferably 37—43D |
| Melt Index 190°C 2160 g g/10 min (ASTM D 1238E) | 2—8, preferably 4—6.5 |
| Tensile Strength (ASTM D 638) | 15—30 MNm$^{-2}$ preferably 19—26 MNm$^{-2}$ min |
| Elongation at Break (ASTM D 638) | 400% minimum |

Suitable elastomers are those sold under the Registered Trade Marks of Hytrel (ex Du Pont) and Arnitel (ex AKZO).

The melting point of the polyester adhesive should be such that the integrity of the hose remains substantially unaffected by the temperatures to which the hose is generally subjected under normal operating conditions. At the same time the melting point should be sufficiently below that of the liner material, preferably at least 20°C below that of the liner material, so that during manufacture of the hose an increase in temperature to activate the adhesive and effect bonding of the liner to the textile reinforcement does not cause appreciable softening of the liner which could result in undesirable changes in the liner thickness.

An adhesive which meets the above criteria and is suitable for use with a liner material having the above-mentioned preferred characteristics has a melting point of not less than 100°C more preferably not less than 130°C. An example of a suitable adhesive is that sold under the Registerd Trade Mark Grilesta 6506 (ex Grilon) which has a melting point in the range of 100—140°C more preferably 130—140°C and a viscosity of 6500 poise at 160°C and 2160 gram load (DIN 53735).

The jacket may be of any known construction, for example knitted braided or woven to produce a balanced construction having the required strength characteristics for a given application. Alternatively the jacket may be of non-woven construction e.g. a spiral winding. Preferably the jacket is of woven construction comprising one or more layers made from natural or synthetic textile material, for example cotton, polyester, polyamide or polyvinyl acetate. A suitable aromatic polyamide is that sold under the Registered Trade Mark Kevlar (ex Du Pont).

Preferably the warp and weft yarns of the jacket are pretreated with a heat reactivatable resin during production to improve the adhesion to the hot melt polyester adhesive. Suitable yarns are those sold under the Registered Trade Mark Diolen 164S (ex British Enkalon).

The polyurethane elastomer of the cover may be selected from the group consisting of polyester, polyether, polyester caprolactone and polyesterether type. Polyester caprolactones are preferred as these exhibit good resistance not only to abrasion and cutting caused by handling but also to a wide range of fluids including hydrocarbon fuels. Preferred polyurethanes are those which are free from low molecular weight oligomers and from waxes, lubricants and other low molecular weight processing aids. Suitable polyester caprolactones are those sold under the Registered Trade Marks Caprolan (ex Elastogram) and Rowathane 1080 (ex Rowa GmbH).

In addition to the improved chemical and physical resistance to a wide range of fluids including hydrocarbon fuels, hoses according to the present invention having a thermoplastics liner can be made in continuous unspliced lengths greater than 76,2 m (250 feet) by conventional methods, for example lengths greater than 152,4 m (500 feet) can be made.

The invention will now be described in more detail by way of example only with reference to the accompanying schematic drawing which shows in cross-section a hose according to the present invention.

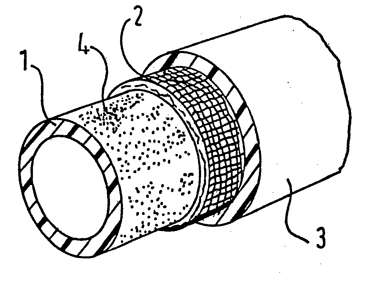

The hose shown in the accompanying drawing comprises a polyetherester (Hytrel) liner 1 bonded to a polyester (Diolen 164S) jacket 2 by a hot melt polyester adhesive 4 (Grilesta 6506) and an outer polyurethane (Caprolan) cover 3.

The liner 1 is made by hot melt extrusion of the polyetherester and is subsequently coated with the adhesive 4 by cross-head or slot die extrusion.

The jacket 2 of circular woven construction is formed separately and subsequently coated on a mandrel with the polyurethane cover 3 by cross-head extrusion. Extrusion of the cover material is such that sufficient penetration into the textile jacket 2 occurs to allow some direct adhesion between the adhesive 4 applied to the liner 1 and the cover material, thereby helping to prevent delamination.

The mandrel is then removed from the polyurethane covered jacket 2 and the adhesive coated liner 1 is drawn through the jacket by any conventional technique.

The hose assembly is then inflated with air to a pressure above atmospheric to position the liner 1 within the jacket 2 and then the air is replaced by steam at 40 psi at a temperature of 140°C for 5—10 minutes to activate the adhesive and effect bonding of the liner to the jacket. Blistering of the liner by any gases or vapour trapped between the liner and cover can be prevented by replacing the steam with air at pressure above atmospheric pressure and allowing the bonded hose to cool whilst still inflated. Blistering of the cover 4 can be prevented by pin-holding the cover during extrusion of the cover material onto the jacket 2.

Alternatively blistering may be prevented by thoroughly drying the hose assembly at a temperature below the activation temperature of the adhesive e.g. by passing air through the space between the liner and cover whilst heating the assembly, for example, by steam passing through the liner.

The hose according to the present invention, which can be made in continuous unspliced lengths greater than 152,4 m (500 feet) exhibits good chemical and physical resistance to a wide range of fluids both when transporting and when exposed to the fluids. The hose may be installed as a permanent supply line or may be used to effect a temporary repair to a damaged supply line or simply to transport fluid from a fixed outlet to a delivery point. The range of fluids which can be transported by the hose include hydrocarbon fuels, e.g. petrol, chemical solvents, organic fluids and drinking water.

**Claims**

1. A hose comprising an inner liner (1) of a thermoplastic elastomer, a tubular textile reinforcement layer (2) and an outer cover (3) of a thermoplastic elastomer, the hose obtained by the steps of forming said reinforcement layer, applying said outer cover thereto, forming said liner and applying an adhesive (4) to the external surface thereof, said adhesive having a melting point below that of said liner material, inserting said adhesive coated liner into said reinforcement layer, passing a fluid medium into said liner to inflate the assembly so formed, applying heat to said assembly sufficient to activate said adhesive and effect bonding of said liner to said reinforcement layer, wherein the adhesive comprises a hot melt polyester adhesive and the hose has a continuous unspliced length of greater than 76 m (250 feet) and more preferably greater than 152 m (500 feet).

2. A hose according to claim 1 characterised in that the adhesive (4) has a melting point not less than 100°C and more preferably not less than 130°C.

3. A hose according to claim 1 or claim 2 characterised in that the adhesive (4) has a melting point at least 20°C below that of the liner material.

4. A hose according to claim 3 characterised in that the adhesive (4) has a melting point in the range 130°C to 140°C and the liner material has a melting point in the range 156°C to 210°C.

5. A hose according to any one of the preceding claims characterised in that the liner material is a polyetherester elastomer.

6. A hose according to any one of the preceding claims characterised in that the cover material is a polyurethane elastomer, preferably a polyester caprolactone.

7. A hose according to any one of the preceding claims characterised in that the fluid medium is at an elevated temperature.

8. A hose according to any one of the preceding claims characterised in that subsequent to bonding the liner (1) to the reinforcement layer (2) the assembly is cooled whilst still inflated.

9. A hose according to any one of the preceding claims characterised in that prior to inflating the assembly a fluid medium is passed between the liner (1) and the reinforcement layer (2) to dry the assembly without activating the adhesive (4).

10. A hose according to any one of the preceding claims, characterised in that the textile material of the reinforcement layer (2) is pretreated with a heat reactivatable resin prior to applying the cover (3).

**Revendications**

1. Tuyau souple comprenant un garnissage intérieur (1) en élastomère thermoplastique, une couche tubulaire de renforcement textile (2) et une gaine extérieure (3) en élastomère thermoplastique, le tuyau souple étant obtenu par les étapes consistant à former ladite couche de renforcement, à appliquer le revêtement extérieur sur celle-ci, à former ledit garnissage et à déposer une adhésif (4) sur sa surface extérieure, ledit adhésif ayant un point de fusion inférieur à celui de la matière de garnissage, à insérer ledit garnissage revêtu d'adhésif dans ladite couche de renforcement, à faire passer un milieu fluide dans ledit garnissage pour gonfler l'ensemble ainsi formé, à appliquer de la chaleur audit ensemble suffisamment pour activer ledit adhésif et assurer une liaison dudit garnissage avec ladite couche de renforcement, dans lequel l'adhésif comprend un adhésif de polyester fusible à chaud et le tuyau souple présente une longueur continue non divisée supérieure à 76 m (250 pieds) et de préférence supérieure à 152 m (500 pieds).

2. Tuyau souple selon la revendication 1, caractérisé en ce que l'adhésif (4) a un point de fusion non inférieur à 100°C et plus avantageusement non inférieur à 130°C.

3. Tuyau souple selon la revendication 1 ou la revendication 2, caractérisé en ce que l'adhésif (4) a un point de fusion inférieur d'au moins 20°C à celui de la matière de garnissage.

4. Tuyau souple selon la revendication 3, caractérisé en ce que l'adhésif (4) a un point de fusion rentrant dans la plage comprise entre 130°C et 140°C et la matière de garnissage a un point de fusion rentrant dans la plage comprise entre 156°C et 210°C.

5. Tuyau souple selon une quelconque des revendications précédentes, caractérisé en ce que la matière de garnissage est une élastomère de polyétherester.

6. Tuyau souple selon une quelconque des revendications précédentes, caractérisé en ce que la matière de revêtement est un élastomère de polyuréthane, de préférence un polyester caprolactone.

7. Tuyau souple selon une quelconque des revendications précédentes caractérisé en ce que le milieu fluide se trouve à une température élevée.

8. Tuyau souple selon une quelconque des revendications précédentes, caractérisé en ce que, après la liaison du garnissage (1) avec la couche de renforcement (2), l'ensemble est refroidi tout en étant encore gonflé.

9. Tuyau souple selon une quelconque des revendications précédentes, caractérisé en ce que, avant le gonflage de l'ensemble, on fait passer un milieu fluide entre le garnissage (1) et la couche de renforcement (2) de manière à sécher l'ensemble sans activation de l'adhésif (4).

10. Tuyau souple selon une quelconque des revendications précédentes, caractérisé en ce que la matière textile de la couche de renforcement (2) est prétraitée avec une résine réactivable par échauffement avant le dépôt de la gaine de revêtement (3).

**Patentansprüche**

1. Schlauch umfassend eine Innenauskleidung (1) aus einem thermoplastischen Elastomer, eine rohrförmige textile Verstärkungsschicht (2) und einen äußeren Mantel (3) aus einem thermoplastischen Elastomer, wobei der Schlauch durch die Schritte erhalten wird, daß die genannte Verstärkungsschicht gebildet wird, genannte äußere Mantel auf diese aufgebracht wird, die Auskleidung gebildet wird und ein Klebemittel (4) auf deren Außenfläche aufgebracht wird, wobei das Klebemittel einen Schmelzpunkt, hat der unter dem des Auskleidungsmaterials liegt, die mit dem Klebemittel beschichtete Auskleidung in die genannte Verstärkungsschicht eingeführt wird, ein Fluid-medium in die Auskleidung geleitet wird, um die in dieser Weise gebildete Anordnung aufzublasen, die genannte Anordnung Wärme ausgesetzt wird, die ausreicht, damit das Klebemittel aktiviert une eine Verbindung der Auskleidung mit der Verstärkungsschicht bewirkt wird, wobei das Klebemittel ein Heißschmelzpolyesterklebemittel umfaßt und der Schlauch eine durchgehende unverspleißte Länge von mehr als 76 m (250 ft) und vorzugsweise mehr als 152 m (500 ft) hat.

2. Schlauch nach Anspruch 1, dadurch gekennzeichnet, daß das Klebemittel (4) einen Schmelzpunkt von nicht weniger als 100°C und vorzugsweise nicht weniger als 130°C hat.

3. Schlauch nach Anspruch 1 oder 2, dadurch gekennzeichnet, daß das Klebemittel (4) einen Schmelzpunkt hat, der um wenigstens 20°C unter dem Auskleidungsmaterials liegt.

4. Schlauch nach Anspruch 3, dadurch gekennzeichnet, daß das Klebemittel (4) einen Schmelzpunkt im Bereich von 130°C und 140°C hat und das Auskleidungsmaterial einen Schmelzpunkt im Bereich von 156°C bis 210°C hat.

5. Schlauch nach einem der vorhergehenden Ansprüche, dadurch gekennzeichnet, daß das Auskleidungsmaterial ein Polyätheresterelastomer ist.

6. Schlauch nach einem der vorhergehenden Ansprüche, dadurch gekennzeichnet, daß das Mantelmaterial ein Polyurethanelastomer vorzugsweise ein Polyestercaprolacton ist.

7. Schlauch nach einem der vorhergehenden Ansprüche, dadurch gekennzeichnet, daß sich das Fluidmedium auf einer erhöhten Temparatur befindet.

8. Schlauch nach einem der vorhergehenden Ansprüche, dadurch gekennzeichnet, daß anschließend an die Verbindung der Auskleidung (1) mit der Verstärkungsschicht (2) die Anordnung abgekühlt wird, während sie noch aufgeblasen wird.

9. Schlauch nach einem der vorhergehenden Ansprüche, dadurch gekennzeichnet, daß vor dem Aufblasen der Anordnung ein Fluidmedium zwischen der Auskleidung (1) und der Verstärkungsschicht (2) hindurchgeführt wird, um die Anordnung zu trocknen ohne des Klebemittel (4) zu aktivieren.

10. Schlauch nach einem der vorhergehenden Ansprüche, dadurch gekennzeichnet, daß das textile Material der Verstärkungsschicht (2) mit einem wärmereaktivierbaren Harz vorbehandelt wird, bevor der Mantel (3) aufgebracht wird.